# EUROPÄISCHE PATENTANMELDUNG

(11) **EP 1 398 517 A2**
(43) Veröffentlichungstag der Anmeldung: **17.03.2004**
(21) Anmeldenummer: 03014088.3
(22) Anmeldetag: 23.06.2003
(51) Int. Cl.: F16C 13/00, D21G 1/02

(54) **Stützelement für eine Biegeausgleichswalze**

(30) Priorität: 26.08.2002 DE 10239089
(71) Anmelder: Voith Paper Patent GmbH, 89522 Heidenheim (DE)
(72) Erfinder: Schnyder, Eugen, 5622 Waltenschwil (CH)
(74) Vertreter: Manitz, Finsterwald & Partner GbR

(57) **Zusammenfassung**

Eine Biegeausgleichswalze (10) umfasst einen umlaufenden Walzenmantel (12), einen den Walzenmantel (12) axial durchsetzendes drehfestes Joch (14) und zwischen dem Joch und dem Walzenmantel angeordnete Stützelemente (16). Dabei umfasst wenigstens ein Stützelement ein zumindest im wesentlichen radial am Joch geführtes Basisteil (20) und ein Kopfteil (22), das am Basisteil über wenigstens ein elastisches, stauchbares Element (24) abgestützt ist, das eine Kippbewegung des Kopfteils bezüglich des Basisteils zulässt.

## Beschreibung

Die Erfindung betrifft eine Biegeausgleichswalze mit einem umlaufenden Walzenmantel, einem den Walzenmantel axial durchsetzenden drehfesten Joch und zwischen dem Joch und dem Walzenmantel angeordneten Stützelementen.

Bei einer derartigen Biegeausgleichswalze kann es im belasteten Zustand zu einer Durchbiegung des Jochs und/oder des Walzenmantels kommen, was die Gefahr mit sich bringt, dass die der Innenfläche des Walzenmantels zugewandten Stützflächen der Stützelemente nicht mehr in der gewünschten Weise mit der Mantelinnenfläche ausgerichtet sind. Vergleichbare Probleme ergeben sich um Fall der Verwendung einer zwischen den Stützelementen und der Innenfläche des Walzenmantels angeordneten Leiste, sobald diese zur Erzielung eines jeweiligen Profils verbogen wird.

Der Erfindung liegt u.a. die Aufgabe zugrunde, eine verbesserte Biegeausgleichswalze der eingangs genannten Art zu schaffen, bei der den zuvor genannten Problemen auf möglichst einfache und entsprechend kostengünstige Art und Weise entgegengewirkt wird.

Diese Aufgabe wird gemäß einem ersten Aspekt der Erfindung dadurch gelöst, dass wenigstens ein Stützelement ein zumindest im wesentlichen radial am Joch geführtes Basisteil und ein Kopfteil umfasst, das am Basisteil über wenigstens ein elastisches, stauchbares Element abgestützt ist, das eine Kippbewegung des Kopfteils bezüglich des Basisteils zulässt.

Aufgrund dieser Ausbildung wird auf äußerst einfache, kostengünstige und dennoch zuverlässige Weise erreicht, dass die Stützelemente bzw. deren Kopfteile mit ihren der Mantelinnenfläche zugewandten Stützflächen auch bei belasteter Walze und entsprechend durchgebogenem Joch und/oder Walzenmantel zumindest im wesentlichen mit der Mantelinnenfläche ausgerichtet bleiben. Mit dem erfindungsgemäßen Einsatz eines elastischen, stauchbaren Elements wird der zur Ermöglichung einer Kippbewegung des Stützelementkopfes erforderliche Aufwand auf ein Minimum reduziert, wodurch auch die Kosten entsprechend gesenkt werden.

Das elastische, stauchbare Element kann insbesondere ringförmig ausgeführt sein.

Vorzugsweise ist das Kopfteil des Stützelements zumindest soweit verkippbar, dass dessen der Innenfläche des Walzenmantels zugewandte Stützfläche auch bei belasteter Walze und entsprechend durchgebogenem Joch und/oder durchgebogenem Walzenmantel zumindest im wesentlichen mit der Mantelinnenfläche ausgerichtet bleibt.

Das Basisteil des Stützelements kann beispielsweise als Kolbenelement ausgeführt sein, dem jochseitig eine zylindrische Führung zugeordnet ist.

Grundsätzlich ist jedoch auch eine solche Ausführung der erfindungsgemäßen Biegeausgleichswalze denkbar, bei der das Basisteil des Stützelements als Zylinderelement ausgeführt ist, dem jochseitig eine kolbenartige Führung zugeordnet ist.

Ist zwischen den Stützelementen und der Innenfläche des Walzenmantels eine Leiste eingesetzt, so kann es bezüglich des Zusammenwirkens von Stützelementen und Leiste wieder zu entsprechenden Problemen kommen, sobald die Leiste zur Erzielung eines jeweiligen Profils verbogen wird. Die betreffenden Probleme treten in verstärktem Maße dann auf, wenn die Leiste durch die Stützelemente jeweils sowohl in Richtung der Innenfläche des Walzenmantels als auch von dieser weg beaufschlagbar ist und aus bestimmten technologischen Gründen ein wellenartiges Profil erzeugt werden soll.

Insbesondere zur Lösung dieser Probleme wird gemäß einem zweiten Aspekt der Erfindung eine Biegeausgleichswalze mit einem umlaufenden Walzenmantel, einem den Walzenmantel axial durchsetzenden drehfesten Joch und zwischen dem Joch und dem Walzenmantel angeordneten Stützelementen vorgeschlagen, die sich dadurch auszeichnet, dass das zwischen den Stützelementen und der Innenfläche des Walzenmantels eine Leiste vorgesehen ist und dass wenigstens ein Stützelement über wenigstens ein elastisches, stauchbares Element an der Leiste abgestützt ist und/oder mit dieser gekoppelt ist, um eine relative Kippbewegung zwischen Stützelement und Leiste zuzulassen.

Dabei ist die Leiste durch die Stützelemente vorzugsweise jeweils sowohl in Richtung der Innenfläche des Walzenmantels als auch von dieser weg beaufschlagbar. Auf diese Weise lässt sich der Leiste gezielt beispielsweise ein wellenförmiges Profil verleihen, was aus bestimmten technologischen Gründen wünschenswert ist. Das damit einhergehende Verbiegen der Leiste ist angesichts der jeweiligen erfindungsgemäßen elastischen, stauchbaren Elemente völlig unproblematisch.

Bei einer zweckmäßigen praktischen Ausführungsform der erfindungsgemäßen Biegeausgleichswalze erstreckt sich das betreffende Ende eines jeweiligen Stützelements durch eine Öffnung der Leiste hindurch in eine erweiterte Ausnehmung der Leiste, mit deren Boden es zum Zurückziehen der Leiste zusammenwirkt.

Auch wenn die Wärmeausdehnungskoeffizienten von Leiste und Joch identisch wären, was im Fall unterschiedlicher Materialien für Joch und Leiste praktisch nicht der Fall ist, dehnen sich Leiste und Joch bedingt durch die Wärmeunterschiede im System unterschiedlich stark aus. Dies kann, falls keine Gegenmaßnahmen ergriffen werden, zu Verspannungen zwischen der Leiste und den Enden der Stützelemente führen. Um dies auszuschließen, sind gemäß einer bevorzugten praktischen Ausführungsform der erfindungsgemäßen Biegeausgleichswalze die Öffnung und die Ausnehmung der Leiste, durch die bzw. in die sich das Stützelementende erstreckt, als sich in Längsrichtung der Leiste erstreckendes Langloch ausgeführt. Die Bereiche der Leisten, in die die Stützelementenden hineinragen, sind also zweckmäßigerweise mit Langlöchern versehen, so dass sich die Leiste quer zur Laufrichtung der betreffenden Materialbahn, z.B. Papier- oder Kartonbahn frei ausdehnen kann. Wie weiter unten näher beschrieben kann gegebenenfalls auch durch eine hydraulische Entlastung für eine höhere relative Beweglichkeit der Leiste gesorgt werden.

Vorteilhafterweise sind die Stützelemente zumindest teilweise getrennt ansteuerbar. Sie können also einzeln oder auch in Gruppen ansteuerbar sein.

Es können insbesondere hydraulische Stützelemente vorgesehen sein, die zweckmäßigerweise mit Drucköl beaufschlagbar sind.

Die Kopfteile der Stützelemente bzw. die Leiste können insbesondere hydrostatisch und/oder hydrodynamisch geschmiert sein.

Der Walzenmantel kann relativ flexibel sein. Gemäß einer bevorzugten Ausführungsform kann er insbesondere aus Polyurethan, Gummi oder GKF bestehen.

Zwischen dem elastischen, stauchbaren Element und der Leiste kann zweckmäßigerweise eine Hülse angeordnet ist. Hierbei kann es sich z.B. um getrennte Elemente handeln. Es ist jedoch insbesondere auch eine solche Ausführung denkbar, bei der das elastische, stauchbare Element und die Hülse beispielsweise durch Vulkanisieren, Verkleben oder dergleichen zu einem Verbundelement zusammengefasst sind.

Die erfindungsgemäße Biegeausgleichswalze ist vorteilhafterweise insbesondere anwendbar in einer Vorrichtung oder Presse zur Herstellung von in einzelne Platten aufteilbaren Faserplattenbahnen, Spanplattenbahnen und/oder dergleichen aus einem lignozellulose- und/oder zellulosehaltige Teilchen und zumindest ein wärmehärtendes Bindemittel enthaltenden Vlies. Denkbar ist hierbei insbesondere eine Verwendung in einer Vorrichtung oder Presse mit einem umlaufenden, mit einer bewegten Gegenfläche wie beispielsweise einer Presstrommel einen Pressspalt bildenden Pressband, insbesondere Stahlband, sowie mit mehreren in Bahnlaufrichtung aufeinanderfolgenden Durchbiegungseinstellwalzen, von denen zumindest eine erfindungsgemäß ausgeführt ist und durch die das umlaufende Pressband im Pressspaltbereich gegen die bewegte Gegenfläche pressbar ist. Die erfindungsgemäße Biegeausgleichswalze kann also beispielsweise in einer solchen Vorrichtung oder Presse eingesetzt werden, wie sie in der EP 0 776 742 B1 und der DE 42 43 917 C1 beschrieben ist.

Die erfindungsgemäße Biegeausgleichswalze ist vorteilhafterweise insbesondere zur Herstellung von Faserstoff-, Span-, HDF-, MDF-, LDF- und/oder OSB-Platten verwendbar.

Grundsätzlich ist die erfindungsgemäße Vorrichtung beispielsweise auch in einer Papiermaschine, einem Kalander, einer Druckmaschine oder einer Vorrichtung zur Herstellung von Dekorpapier verwendbar.

Beliebige andere Verwendungen sind denkbar.

Die Erfindung wird im folgenden anhand eines Ausführungsbeispiels unter Bezugnahme auf die Zeichnung näher erläutert; in dieser zeigen:
- Figur 1: einen schematischen Längsschnitt eines Teils einer Biegeausgleichswalze und
- Figur 2: einen schematischen Querschnitt eines Teils einer weiteren Ausführungsform einer Biegeausgleichswalze mit einer zwischen den Stützelementen und der Innenfläche des Walzenmantels angeordneten Leiste.

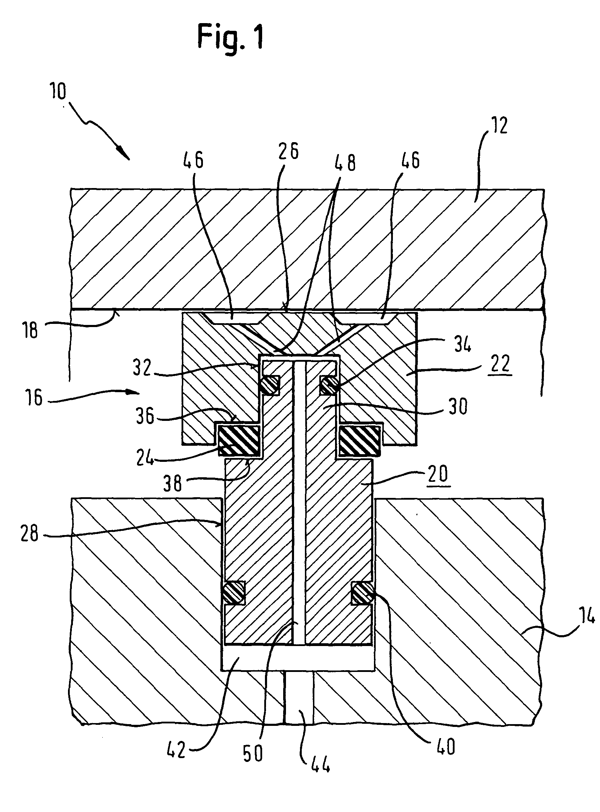

Figur 1 zeigt in schematischer Längsschnittdarstellung einen Teil einer Biegeausgleichswalze 10.

Wie anhand der Figur 1 zu erkennen ist, umfasst diese Biegeausgleichswalze 10 einen umlaufenden Walzenmantel 12, ein den Walzenmantel 12 axial durchsetzendes drehfestes Joch 14 und zwischen dem Joch 14 und dem Walzenmantel 12 angeordnete Stützelemente 16, über die im vorliegenden Fall unmittelbar die Innenfläche 18 des Walzenmantels 12 beaufschlagbar ist.

Dabei umfasst wenigstens ein Stützelement 16 ein zumindest im wesentlichen radial am Joch 14 geführtes Basisteil 20 und ein Kopfteil 22, das am Basisteil 20 über wenigstens ein elastisches, insbesondere stauchbares Element 24 abgestützt ist, das eine Kippbewegung des Kopfteils 22 bezüglich des Basisteils 20 zulässt. Wie anhand der Figur 1 zu erkennen ist, kann dieses Element 24 insbesondere in Form eines Ringes vorgesehen sein.

Beim vorliegenden Ausführungsbeispiel ist sämtlichen Stützelementen 16 jeweils ein solches elastisches, stauchbares Element 24 zugeordnet.

Das Kopfteil 22 eines jeweiligen Stützelementes 16 kann insbesondere zumindest soweit verkippbar sein, dass dessen der Innenfläche 18 des Walzenmantels 12 zugewandte Stützfläche 26 auch bei belasteter Walze 10 und entsprechend durchgebogenem Joch 14 und/oder durchgebogenem Walzenmantel 12 zumindest im wesentlichen mit der Mantelinnenfläche 18 ausgerichtet bleibt.

Bei einer jeweiligen Durchbiegung des Jochs 14 und/oder des Walzenmantels 12 wird durch das elastische, stauchbare Element 20 also eine entsprechende Kippbewegung des Kopfteils 22 des Stützelements 16 zugelassen.

Wie anhand der Figur 1 zu erkennen ist, ist beim vorliegenden Ausführungsbeispiel das Basisteil 20 des Stützelements 16 als Kolbenelement ausgeführt, dem jochseitig eine zylindrische Führung 28 zugeordnet ist.

Grundsätzlich kann das Basisteil 20 jedoch auch als Zylinderelement ausgeführt sein, dem jochseitig eine kolbenartige Führung zugeordnet ist.

Das ringartige elastische, stauchbare Element 24 ist im vorliegenden Fall auf einen Ansatz 30 des Basisteils 20 aufgeschoben, der einen kleineren Durchmesser als das restliche Basisteil 20 besitzt und in eine im Kopfteil 22 vorgesehene zylindrische Ausnehmung 32 ragt, gegenüber deren Wandung der Ansatz 30 durch einen O-Ring 34 angedichtet ist.

Auf seiner dem Joch 14 zugewandten Seite besitzt das Kopfteil 22 überdies eine insbesondere zylindrische Ausnehmung 36, deren Durchmesser größer ist als der der zylindrischen Ausnehmung 32. Wie anhand der Figur 1 zu erkennen ist, liegt der elastische, stauchbare Ring zumindest teilweise in dieser Ausnehmung 36, so dass er bei belastetem Stützelement 16 einerseits am Boden der Ausnehmung 36 und andererseits an der Ringfläche 38 des Basisteils 20 im Bereich des Übergangs zum Ansatz 30 abgestützt ist.

Das Basisteil 20 ist zudem über einen O-Ring 40 gegenüber der Wandung der jochseitigen zylindrischen Führung 28 angedichtet.

Beim vorliegenden Ausführungsbeispiel sind hydraulische Stützelemente 16 vorgesehen, die insbesondere mit Drucköl beaufschlagbar sind. Dabei werden die verschiedenen Druckräume 42 über Leitungen 28 mit Drucköl versorgt. Die verschiedenen Stützelemente 16 können einzeln oder auch gruppenweise angesteuert werden. Sie können insbesondere hydrostatisch und/oder hydrodynamisch geschmiert sein.

Im vorliegenden Fall ist die Stützfläche 26 des Kopfteils 22 mit wenigstens einer Hydrostatiktasche 46 versehen, die über wenigstens eine im Kopfteil 22 vorgesehene, in die zylindrische Ausnehmung 32 mündende Kapillarbohrung 48 versorgt wird. Im vorliegenden Fall erfolgt die Versorgung der Hydrostatiktaschen 46 über den Druckraum 42, wozu das Basisteil 20 mit einer Durchgangsbohrung 50 versehen ist, die einerseits mit dem Druckraum 42 und andererseits mit dem bodenseitigen Abschnitt der zylindrischen Ausnehmung 32 in Verbindung steht, in den die Kapillarbohrungen 48 münden.

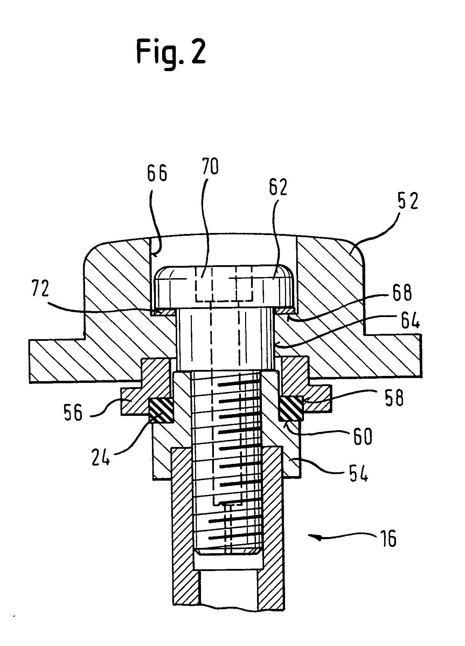

Figur 2 zeigt einen schematischen Querschnitt eines Teils einer weiteren Ausführungsform einer Biegeausgleichswalze mit einer zwischen den Stützelementen 16 und der Innenfläche des Walzenmantels angeordneten Leiste 52.

Dabei ist wenigstens ein Stützelement 16 über ein elastisches, stauchbares Element, auch im vorliegenden Fall beispielsweise wieder einen elastischen, stauchbaren Ring 24 an der Leiste 52 abgestützt und/oder mit dieser gekoppelt, um eine relative Kippbewegung zwischen Stützelement 16 und Leiste 52 zuzulassen.

Das Stützelement 16 ist zumindest im wesentlichen radial am Joch, z. B. einer zylindrische Ausnehmung des Jochs, geführt.

Beim vorliegenden Ausführungsbeispiel ist die Leiste 52 durch die Stützelemente 16 jeweils sowohl in Richtung der Innenflüche des Walzenmantels als auch von dieser weg beaufschlagbar. Auf diese Weise lässt sich der Leiste 52 gezielt beispielsweise ein wellenförmiges Profil verleihen, was aus bestimmten technologischen Gründen wünschenswert ist.

Die Stützelemente 16 können zumindest teilweise wieder getrennt ansteuerbar sein.

Wie anhand der Figur 2 zu erkennen ist, kann der elastische, stauchbare Ring 24 beispielsweise zwischen einer dem Stützelement 16 zugeordneten abgestuften Hülse 54 und einer der Leiste 52 zugeordneten Hülse 56 angeordnet sein, deren Wandung mit einer ringförmigen Ausnehmung 58 versehen ist, in der der elastische, stauchbare Ring 24 zumindest teilweise aufgenommen ist. Andererseits ist der elastische, stauchbare Ring 24 an einer im Bereich der Abstufung der Hülse 54 vorgesehenen Ringfläche 60 abgestützt.

Im vorliegenden Fall handelt es sich bei dem elastischen, stauchbaren Element 24 und der Hülse 56 z.B. um getrennte Elemente. Grundsätzlich ist jedoch insbesondere auch eine solche Ausführung denkbar, bei der das elastische, stauchbare Element 24 und die Hülse 56 beispielsweise durch Vulkanisieren, Verkleben oder dergleichen zu einem Verbundelement zusammengefasst sind.

Um die Leiste 52 auch von der Innenfläche des Walzenmantels wegziehen zu können, erstreckt sich das betreffende Ende 62 eines jeweiligen Stützelements 16 durch eine Öffnung oder Bohrung 64 der Leiste 52 hindurch in eine erweiterte, zur Mantelinnenfläche hin offene Ausnehmung 66 der Leiste 52, in der es entsprechend erweitert ist, um zum Zurückziehen der Leiste 52 entsprechend mit den Boden 68 der Ausnehmung 66 zusammenwirken zu können. Das erweiterte Ende 62 des Stützelements 16 kann beispielsweise über eine Imbusschraube 70 oder dergleichen mit dem restlichen Stützelement 16 verbunden sein. Diese Imbusschraube 70 kann beispielsweise mit einer Kapillarbohrung versehen sein, um insbesondere eine entsprechende Schmierung des Bereichs zwischen der Leiste 52 und der Innenfläche des Walzenmantels zu ermöglichen.

Die Öffnung 64 und die Ausnehmung 66 können insbesondere als sich in Längsrichtung der Leiste 52 erstreckendes Langloch ausgeführt sein, so dass sich die Leiste quer zur Laufrichtung der betreffenden Warenbahn, d.h. z.B. Papier- oder Kartonbahn, frei ausdehnen kann.

Es ist insbesondere auch eine hydraulische Entlastung in der Kraftübertragung zwischen der Hülse 56 und der Leiste 52 denkbar, um ein Rutschen zu erleichtern, so dass sich die Leiste 52 leichter relativ zur Hülse 56 bewegen kann. Erreicht wird dies beispielsweise durch eine entsprechende freigearbeitete Fläche und den sich daraus ergebenden hydraulischen Entlastungsfluss. So ist beispielsweise ein leichtes Abschrägen der Hülse 56 usw. denkbar.

Zwischen dem Ende 62 des Stützelements 16 und dem Boden 68 kann eine Unterlagscheibe 72 oder dergleichen vorgesehen sein, die keine Dichtfunktion erfüllen muss. Dagegen kann das elastische Element 24 gleichzeitig auch als Dichtung wirken.

Der Walzenmantel 12 (vgl. Fig. 1) kann relativ flexibel sein. Die innere Lauffläche des Mantels kann beispielsweise aus Polyurethan, Gummi oder GKF bestehen.

Die soeben beschriebenen Biegeausgleichswalzen 10 sind beispielsweise verwendbar in einer Vorrichtung oder Presse zur Herstellung von in einzelne Platten aufteilbaren Faserplattenbahnen, Spanplattenbahnen und/oder dergleichen aus einem lignozellulose- und/oder zellulosehaltige Teilchen und zumindest ein wärmehärtendes Bindemittel enthaltenden Vlies. Sie sind insbesondere verwendbar zur Herstellung von Faserstoff-, Span-, HDF-, MDF-, LDF- und/oder OSB-Platten. Grundsätzlich ist auch eine Verwendung z.B. in einer Papiermaschine, einem Kalander, einer Druckmaschine, einer Maschine zur Herstellung von Dekorpapier, einer Textilmaschine und/oder dergleichen denkbar.

### Bezugszeichenliste

- 10: Biegeausgleichswalze
- 12: Walzenmantel
- 14: Joch
- 16: Stützelement
- 18: Mantelinnenfläche
- 20: Basisteil
- 22: Kopfteil
- 24: elastisches, stauchbares Element, Ring
- 26: Stützfläche
- 28: zylindrische Führung
- 30: Ansatz
- 32: zylindrische Ausnehmung
- 34: O-Ring
- 36: Ausnehmung
- 38: Ringfläche
- 40: O-Ring
- 42: Druckraum
- 44: Leitung
- 46: Hydrostatiktasche
- 48: Kapillarbohrung
- 50: Durchgangsbohrung
- 52: Leiste
- 54: Hülse
- 56: Hülse
- 58: Ausnehmung
- 60: Ringfläche
- 62: Ende
- 64: Öffnung, Bohrung
- 66: Ausnehmung
- 68: Boden
- 70: Imbusschraube
- 72: Unterlagscheibe

## Patentansprüche

1. Biegeausgleichswalze (10) mit einem umlaufenden Walzenmantel (12), einem den Walzenmantel (12) axial durchsetzenden drehfesten Joch (14) und zwischen dem Joch (14) und dem Walzenmantel (12) angeordneten Stützelementen (16),
**dadurch gekennzeichnet,**
**dass** wenigstens ein Stützelement (16) ein zumindest im wesentlichen radial am Joch (14) geführtes Basisteil (20) und ein Kopfteil (22) umfasst, das am Basisteil (20) über wenigstens ein elastisches, stauchbares Element (24) abgestützt ist, das eine Kippbewegung des Kopfteils (22) bezüglich des Basisteils (20) zulässt.

2. Biegeausgleichswalze nach Anspruch 1,
**dadurch gekennzeichnet,**
**dass** das elastische, stauchbare Element (24) ringförmig ausgebildet ist.

3. Biegeausgleichswalze nach Anspruch 1 oder 2,
**dadurch gekennzeichnet,**
**dass** das Kopfteil (22) des Stützelements (16) zumindest soweit verkippbar ist, dass dessen der Innenfläche (18) des Walzenmantels (12) zugewandte Stützfläche (26) auch bei belasteter Walze (10) und entsprechend durchgebogenem Joch (14) und/oder durchgebogenem Walzenmantel (12) zumindest im Wesentlichen mit der Mantelinnenfläche (18) ausgerichtet bleibt.

4. Biegeausgleichswalze nach einem der vorhergehenden Ansprüche,
**dadurch gekennzeichnet,**
**dass** das Basisteil (20) des Stützelements (16) als Kolbenelement ausgeführt ist, dem jochseitig eine zylindrische Führung (28) zugeordnet ist.

5. Biegeausgleichswalze nach einem der Ansprüche 1 bis 3,
**dadurch gekennzeichnet,**
**dass** das Basisteil (20) des Stützelements (16) als Zylinderelement ausgeführt ist, dem jochseitig eine kolbenartige Führung zugeordnet ist.

6. Biegeausgleichswalze (10) mit einem umlaufenden Walzenmantel (12), einem den Walzenmantel (12) axial durchsetzenden drehfesten Joch (14) und zwischen dem Joch (14) und dem Walzenmantel (12) angeordneten Stützelementen (16),
**dadurch gekennzeichnet,**
**dass** zwischen den Stützelementen (16) und der Innenfläche (18) des Walzenmantels (12) eine Leiste (52) vorgesehen ist und dass wenigstens ein Stützelement (16) über wenigstens ein elastisches, stauchbares Element (24) an der Leiste (52) abgestützt ist und/oder mit dieser gekoppelt ist, um eine relative Kippbewegung zwischen Stützelement (16) und Leiste (52) zuzulassen.

7. Biegeausgleichswalze nach Anspruch 6,
**dadurch gekennzeichnet,**
**dass** die Leiste (52) durch die Stützelemente (16) jeweils sowohl in Richtung der Innenfläche (18) des Walzenmantels als auch von dieser weg beaufschlagbar ist.

8. Biegeausgleichswalze nach Anspruch 7,
**dadurch gekennzeichnet,**
**dass** sich das betreffende Ende (62) eines jeweiligen Stützelements (16) durch eine Öffnung (64) der Leiste (52) hindurch in eine erweiterte Ausnehmung (66) der Leiste (52) erstreckt, mit deren Boden es zum Zurückziehen der Leiste (52) zusammenwirkt.

9. Biegeausgleichswalze nach Anspruch 8,
**dadurch gekennzeichnet**
die Öffnung (64) und die Ausnehmung (66) als sich in Längsrichtung der Leiste (52) erstreckendes Langloch ausgeführt sind.

10. Biegeausgleichswalze nach einem der vorhergehenden Ansprüche,
**dadurch gekennzeichnet,**
**dass** die Stützelemente (16) zumindest teilweise getrennt ansteuerbar sind.

11. Biegeausgleichswalze nach einem der vorhergehenden Ansprüche,
**dadurch gekennzeichnet,**
**dass** hydraulische Stützelemente (16) vorgesehen sind.

12. Biegeausgleichswalze nach Anspruch 11,
**dadurch gekennzeichnet,**
**dass** die Stützelemente (16) mit Drucköl beaufschlagbar sind.

13. Biegeausgleichswalze nach einem der vorhergehenden Ansprüche,
**dadurch gekennzeichnet,**
**dass** die Kopfteile (22) der Stützelemente (16) bzw. die Leiste (52) hydrostatisch und/oder hydrodynamisch geschmiert sind.

14. Biegeausgleichswalze nach einem der vorhergehenden Ansprüche,
**dadurch gekennzeichnet,**
**dass** der Walzenmantel (12) aus- Polyurethan, Gummi oder GKF besteht.

15. Biegeausgleichswalze nach einem der vorhergehenden Ansprüche,
**dadurch gekennzeichnet,**
**dass** zwischen dem elastischen, stauchbaren Element (24) und der Leiste (52) eine Hülse (56) angeordnet ist.

16. Biegeausgleichswalze nach Anspruch 15,
**dadurch gekennzeichnet,**
**dass** das elastische, stauchbare Element (24) und die Hülse (56) beispielsweise durch Vulkanisieren, Verkleben oder dergleichen zu einem Verbundelement zusammengefasst sind.

17. Verwendung der Biegeausgleichswalze (10) nach einem der vorhergehenden Ansprüche in einer Presse zur Herstellung von in einzelne Platten aufteilbaren Faserplattenbahnen, Spanplattenbahnen und/oder dergleichen aus einem lignozellulose- und/oder zellulosehaltige Teilchen und zumindest ein wärmehärtendes Bindemittel enthaltenden Vlies.

18. Verwendung der Biegeausgleichswalze (10) nach einem der vorhergehenden Ansprüche in einer Presse zur Herstellung von Faserstoff-, Span-, HDF-, MDF-, LDF- und/oder OSB-Platten.

19. Verwendung der Biegeausgleichswalze (10) nach einem der vorhergehenden Ansprüche in einer Papiermaschine, einem Kalander, einer Druckmaschine, einer Maschine zur Herstellung von Dekorpapier oder einer Textilmaschine.
